# EUROPEAN PATENT APPLICATION

(11) **EP 4 803 852 A1**
(43) Date of publication of application: **09.09.2026**
(21) Application number: 26162371.4
(22) Date of filing: 04.03.2026
(51) Int. Cl.: G01B 9/02, G01B 9/02015, G01B 9/02055, G01B 11/24, G03H 1/04

(54) **OPTICAL MEASUREMENT SYSTEM AND OPTICAL MEASUREMENT METHOD**

(30) Priority: 06.03.2025 JP 2025035622
(71) Applicant: Otsuka Electronics Co., Ltd., Hirakata-shi, Osaka 573-1132 (JP)
(72) Inventor: SHIMODA, Kensaku, Hirakata shi, Osaka, 573-1132 (JP); TAKAHASHI, Naoto, Hirakata shi, Osaka, 573-1132 (JP)
(74) Representative: Hoffmann Eitle

(57) **Abstract**

An optical measurement system includes a light source, an optical system that illuminates a sample with light from the light source and records a wavefront of reflection light from the sample, and a processing unit that calculates a surface topography of the sample based on information on the wavefront of reflection light. An angle of incidence of the light illuminating the sample is set based on a complex amplitude reflection coefficient based on light reflected at a surface of the sample and a complex amplitude reflection coefficient based on light reflected at a portion other than the surface of the sample.

## Description

The present disclosure relates to an optical measurement system that measures a surface topography and an optical measurement method.

### INTRODUCTION

A background art as below has been known as a method of measuring a surface topography of a sample.

Japanese Patent Laying-Open No. 2009-145774 discloses a scanning laser microscope capable of inexpensively and highly accurately measuring height information at a high speed.

Japanese Patent Laying-Open No. 2018-146391 discloses a surface topography measurement apparatus that can achieve higher accuracy in measurement of a surface topography by properly selecting an objective and adjusting a quantity of light in measurement of the surface topography of a measured surface.

Japanese Patent Laying-Open No. 2012-168001 discloses a configuration configured to highly accurately measure a topography with a contact probe by controlling contact force in a stable manner even at an inclined surface as steep as the vertical.

### SUMMARY

In the method disclosed in Japanese Patent Laying-Open No. 2009-145774 and the method disclosed in Japanese Patent Laying-Open No. 2018-146391, in each case, the surface topography of a sample cannot correctly be measured when a reflective component at a rear surface of the sample is stronger than a reflective component at a front surface of the sample.

The method disclosed in Japanese Patent Laying-Open No. 2012-168001 is a contact measurement method, and the sample may be damaged. Since the method is linear measurement, it takes time for measurement.

A measurement apparatus that can more accurately measure a surface topography of a sample has been demanded.

(Configuration 1) An optical measurement system according to the present embodiment includes a light source, an optical system that illuminates a sample with light from the light source and records a wavefront of reflection light from the sample, and a processing unit that calculates a surface topography of the sample based on information on the wavefront of the reflection light. An angle of incidence of the light illuminating the sample is set based on a complex amplitude reflection coefficient based on light reflected at a surface of the sample and a complex amplitude reflection coefficient based on light reflected at a portion other than the surface of the sample.

(Configuration 2) In Configuration 1, the optical system may include an image sensor on which the reflection light is incident and an optical fiber for superimposition of the reflection light and light from the light source at a light reception surface of the image sensor.

(Configuration 3) In Configuration 1 or 2, the sample may be arranged such that a direction of a cross-sectional shape to be measured is orthogonal to a direction of the light illuminating the sample.

(Configuration 4) In any one of Configurations 1 to 3, the optical measurement system may further include a lens that converts light from the light source to parallel light. The converted parallel light may be incident on the sample.

(Configuration 5) In any one of Configurations 1 to 3, the optical measurement system may further include a pinhole through which light from the light source passes. Diverging light that has passed through the pinhole may be incident on the sample.

(Configuration 6) In any one of Configurations 1 to 5, the processing unit may extract information on bright fringes and dark fringes of interference fringes that appear in a hologram that is recorded by the image sensor and produced by superimposition of light to calculate the surface topography of the sample.

(Configuration 7) In any one of Configurations 1 to 6, the processing unit may calculate the surface topography of the sample by using an amount of correction based on magnitude of a complex amplitude reflection coefficient of the sample, magnitude of the complex amplitude reflection coefficient based on light reflected at the surface of the sample, and magnitude of the complex amplitude reflection coefficient based on light reflected at the portion other than the surface of the sample.

(Configuration 8) An optical measurement system according to the present embodiment includes a light source, an optical system that illuminates a sample with light from the light source and records a wavefront of reflection light from the sample, and a processing unit that calculates a surface topography of the sample based on information on the wavefront of the reflection light. An angle of incidence of the light illuminating the sample is set to exceed an arccosine of a value calculated by dividing a half wavelength of light from the light source by an amount of variation of the surface topography of the sample.

(Configuration 9) An optical measurement method according to the present embodiment includes illuminating a sample with light from a light source, recording a wavefront of reflection light from the sample, and calculating a surface topography of the sample based on information on the wavefront of the reflection light. An angle of incidence of the light illuminating the sample is set based on a complex amplitude reflection coefficient based on light reflected at a surface of the sample and a complex amplitude reflection coefficient based on light reflected at a portion other than the surface of the sample.

(Configuration 10) In Configuration 9, the operation of recording the wavefront of the reflection light may include recording a hologram that is produced by superimposing the reflection light and light from the light source. The optical measurement method may include extracting information on bright fringes and dark fringes of interference fringes that appear in the hologram.

(Configuration 11) In Configuration 9 or 10, the operation of calculating the surface topography of the sample may be based on (i) an amount of correction based on magnitude of a complex amplitude reflection coefficient of the sample, (ii) magnitude of the complex amplitude reflection coefficient based on light reflected at the surface of the sample, and (iii) magnitude of the complex amplitude reflection coefficient based on light reflected at the portion other than the surface of the sample.

(Configuration 12) In any of Configurations 9 to 11, the sample may be arranged such that a direction of a cross-sectional shape to be measured is orthogonal to a direction of the light illuminating the sample.

(Configuration 13) In any of Configurations 9 to 12, the process of illuminating the sample may include converting light from the light source to parallel light and directing the converted parallel light onto the sample.

(Configuration 14) In any of Configurations 9 to 12,the process of illuminating the sample comprises producing diverging light by causing light from the light source to pass through a pinhole and directing the diverging light onto the sample.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a schematic diagram showing an exemplary basic configuration of an optical measurement system according to the present embodiment.
Figs. 2A and 2B are each a schematic diagram showing an exemplary configuration of the optical measurement system according to the present embodiment.
Fig. 3 is a schematic diagram showing an exemplary configuration of an information processing apparatus according to the present embodiment.
Figs. 4A and 4B are each a flowchart showing an exemplary processing procedure of sample measurement processing with the use of the optical measurement system according to the present embodiment.
Fig. 5 is a diagram for illustrating a behavior of light waves incident on a sample having a film structure.
Fig. 6 is a diagram showing an example where an error of an argument is maximum.
Figs. 7A and 7B are each a diagram showing exemplary measurement in an example where a relatively small angle of incidence is set.
Figs. 8A and 8B are each a diagram showing exemplary measurement in an example where a relatively large angle of incidence is set.
Fig. 9 is a diagram for illustrating a high-resolution axis and a low-resolution axis in the optical measurement system according to the present embodiment.
Fig. 10 is a schematic diagram showing another exemplary basic configuration of the optical measurement system according to the present embodiment.
Figs. 11A and 11B are each a diagram showing exemplary relation between a phase of a complex amplitude reflection coefficient of outermost-surface-reflection light and a phase of a complex amplitude reflection coefficient of multiple reflection light.
Fig. 12 is a diagram for illustrating an amount of phase shift originating from the complex amplitude reflection coefficient of multiple reflection light.
Figs. 13A and 13B are each a diagram showing exemplary measurement of a sample having a rough surface.

### DETAILED DESCRIPTION

An embodiment of the present invention will be described in detail with reference to the drawings. The same or corresponding elements in the drawings have the same reference characters allotted and description thereof will not be repeated.

### <A. Exemplary Configuration of Optical Measurement System>

An exemplary configuration of an optical measurement system according to the present embodiment will initially be described.

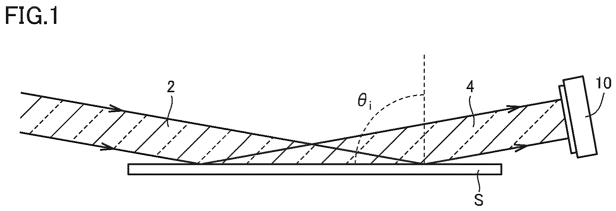

Fig. 1 is a schematic diagram showing an exemplary basic configuration of the optical measurement system according to the present embodiment. Referring to Fig. 1, the optical measurement system includes an optical system configured to illuminate a sample S with light from a light source and record a wavefront of reflection light 4 from sample S.

A wavefront sensor 10 obtains a surface distribution of an amplitude and a phase of light, as information on the wavefront. Wavefront sensor 10 outputs information on the recorded wavefront of reflection light 4.

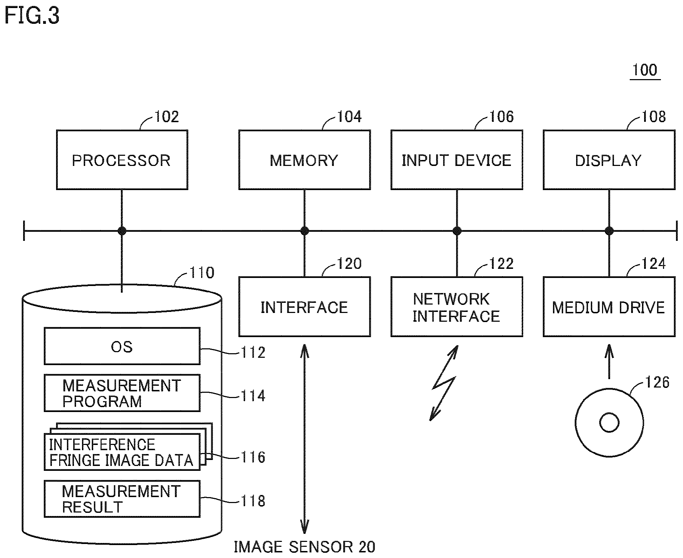

The optical measurement system includes a processing unit (for example, an information processing apparatus 100 shown in Fig. 3) that calculates a surface topography of sample S based on the information on the wavefront of reflection light 4. For example, the processing unit calculates the surface topography or the like of sample S based on the surface distribution of the amplitude and the phase of light obtained by wavefront sensor 10. The surface topography of sample S measured by the optical measurement system may be a topography of a surface at an outermost side (which is also referred to as an "outermost surface" below) of sample S.

A relatively large angle is selected as an angle of incidence θᵢ of illumination light 2. For example, angle of incidence θᵢ of illumination light 2 may be set to be not smaller than seventy degrees and smaller than ninety degrees. Angle of incidence θᵢ may be set to be not smaller than seventy-five degrees and smaller than ninety degrees. Angle of incidence θᵢ may be set to be not smaller than eighty degrees and smaller than ninety degrees. A method of setting angle of incidence θᵢ of illumination light 2 will be described later.

The optical system that records the wavefront of reflection light 4 from sample S may be a system in conformity with any technique, such as holography, interference fringe analysis, or a Shack-Hartmann wavefront sensor.

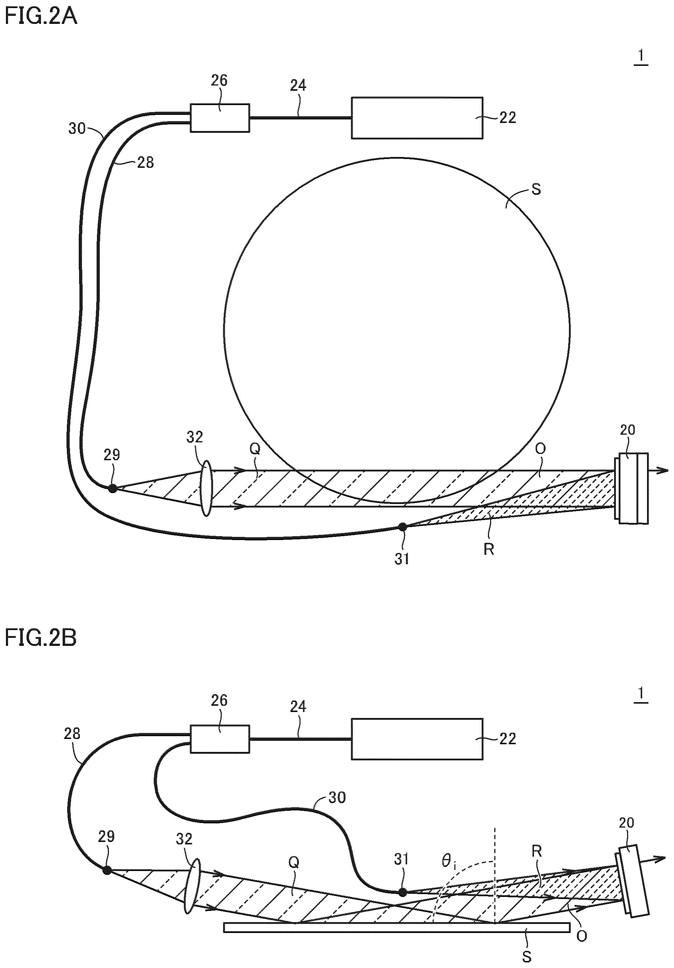

Figs. 2A and 2B show one implementation of the exemplary basic configuration shown in Fig. 1.

Figs. 2A and 2B exemplify an example where sample S in a form of a disc is measured. Fig. 2A shows a diagram (top view) when the optical system of an optical measurement system 1 is viewed from above and Fig. 2B shows a diagram (side view) when the optical system of optical measurement system 1 is laterally viewed.

Figs. 2A and 2B show an exemplary configuration where off-axis holography principles are used, as one implementation of the optical system that records the wavefront. In other words, optical measurement system 1 shown in Figs. 2A and 2B includes an optical system adapted to off-axis holography.

Optical measurement system 1 includes, as the optical system that records the wavefront, an image sensor 20, a light source 22, optical fibers 24, 28, and 30, a coupler 26, and a lens 32. Optical measurement system 1 includes information processing apparatus 100 (see Fig. 3).

Light source 22 generates illumination light Q and a reference beam R. Light source 22 may be, for example, an interfering light source such as laser.

Optical fiber 24 optically connects light source 22 and coupler 26 to each other. Coupler 26 divides light from light source 22 inputted through optical fiber 24. Optical fibers 24, 28, and 30 may each be a single mode fiber.

One light divided by coupler 26 is emitted from a fiber end 29 of optical fiber 28. Light emitted from fiber end 29 of optical fiber 28 is converted (or collimated) to parallel light having a predetermined diameter by lens 32. Lens 32 converts light from light source 22 to parallel light. Parallel light converted by lens 32 is used as illumination light Q. As illumination light Q is incident on sample S at angle of incidence θᵢ, sample S is illuminated therewith. An object beam O generated by reflection of illumination light Q at sample S is incident on image sensor 20.

The other light divided by coupler 26 is emitted from a fiber end 31 of optical fiber 30. Light emitted from fiber end 31 of optical fiber 30 is used as reference beam R. Reference beam R emitted from fiber end 31 of optical fiber 30 is incident on image sensor 20. Since light emitted from fiber end 31 of optical fiber 30 is used as it is as reference beam R, fiber end 31 can be regarded as a point light source of reference beam R.

Object beam O and reference beam R are superimposed at a light reception surface (which is also referred to as a "recording surface" below) of image sensor 20. Optical fiber 30 (or fiber end 31) thus superimposes object beam O which is reflection light from sample S and reference beam R which is light from light source 22, at the recording surface of image sensor 20. An optical axis of object beam O and an optical axis of reference beam R do not match with each other.

Since object beam O and reference beam R are interfering, interference fringes are formed at the recording surface of image sensor 20. The interference fringes formed at the recording surface of image sensor 20 reflects the surface topography of sample S illuminated with illumination light Q. Information on an image showing the interference fringes recorded by image sensor 20 is outputted to information processing apparatus 100.

Information processing apparatus 100 analyzes the interference fringes obtained by superimposition of object beam O and reference beam R to obtain the surface distribution of the amplitude and the phase of light.

### <B. Exemplary Configuration of Information Processing Apparatus 100>

An exemplary configuration of information processing apparatus 100 included in optical measurement system 1 according to the present embodiment will now be described.

Referring to Fig. 3, information processing apparatus 100 is an exemplary computer and includes one or more processors 102, a memory 104, an input device 106, a display 108, a storage 110, an interface 120, a network interface 122, and a medium drive 124.

One or more processors 102 include, for example, computing circuitry that performs processing in accordance with computer-readable instructions. One or more processors 102 read one or more programs stored in storage 110 on memory 104 and executes the same. One or more processors 102 may be a multi-core processor or a multiprocessor.

The term "processor" herein encompasses at least a central processing unit (CPU), a graphics processing unit (GPU), an application specific integrated circuit (ASIC), a field programmable gate array (FPGA), and a dynamically reconfigurable processor (DRP).

Memory 104 is implemented, for example, by a volatile memory such as a dynamic random access memory (DRAM) or a static random access memory (SRAM), and functions as a working memory for execution of a program by one or more processors 102.

Storage 110 is implemented, for example, by a non-volatile memory such as a hard disk or a flash memory, and various programs and data are stored therein. For example, an operating system (OS) 112, a measurement program 114, interference fringe image data 116, and a measurement result 118 are stored in storage 110.

The term "memory" herein encompasses at least memory 104 and storage 110.

Operating system 112 provides an environment where one or more processors 102 execute a program. Measurement program 114 implements an optical measurement method or the like according to the present embodiment by being executed by one or more processors 102. By being executed by information processing apparatus 100 which is an exemplary computer, measurement program 114 causes information processing apparatus 100 to perform the optical measurement method according to the present embodiment. Measurement program 114 may be an assembly of a plurality of programs.

Interference fringe image data 116 includes information recorded by image sensor 20. Measurement result 118 includes a measurement result (for example, the surface topography of sample S) obtained by execution of measurement program 114.

Input device 106 includes, for example, a keyboard, a mouse, and the like and receives an operation from a user.

Display 108 provides output of a result or the like of execution of a program by one or more processors 102 to a user.

Interface 120 is responsible, for example, for data transmission for obtaining information from image sensor 20.

Network interface 122 is responsible, for example, for data transmission between information processing apparatus 100 and an external server apparatus.

Medium drive 124 reads a necessary program or data from a recording medium 126 (for example, an optical disc or the like) and has the program or data stored in storage 110 or the like. Measurement program 114 or the like executed in information processing apparatus 100 may be installed through recording medium 126 or the like or downloaded from a server apparatus through network interface 122 or the like.

Measurement program 114 may use a necessary module by calling the same at predetermined timing out of program modules provided as a part of operating system 112. Therefore, even measurement program 114 not including some of the modules necessary for processing according to the present invention is also encompassed in the technical scope of the present invention. Measurement program 114 may be provided as being incorporated as a part of another program.

### <C. Processing for Measuring Surface Topography>

Processing for measuring the surface topography in optical measurement system 1 according to the present embodiment will now be described. In the description below, a direction perpendicular to the recording surface is defined as a z axis, and two axes orthogonal to the z axis are defined as an x axis and a y axis. In other words, the x axis and the y axis are in parallel to the recording surface. For example, an intersection between the recording surface and a central optical axis of object beam O is defined as an "origin" (x = 0, y = 0, z = 0). Any point on the recording surface may be defined as the origin. For the sake of brevity of description, denotation of a coordinate (x, y) may be omitted as appropriate in an expression below.

Object beam O and reference beam R are light beams having angular frequencies ω coherent to each other. Surface distributions of object beam O and reference beam R are expressed in general expressions shown in expressions (1) and (2) below. $O \left(x, y\right) = {O}_{0} \left(x, y\right) exp \left[i\left({φ}_{O}\left(x, y\right)-ωt\right)\right]$ $R \left(x, y\right) = {R}_{0} \left(x, y\right) exp \left[i\left({φ}_{R}\left(x, y\right)-ωt\right)\right]$

In the optical system shown in Figs. 2A and 2B, an off-axis hologram I_{OR} recorded at the recording surface of image sensor 20 is expressed as in an expression (3) below, as light intensity of combined light of light expressed in the expression (1) and light expressed in the expression (2). ${I}_{OR} \left(x, y\right) = {\left|O+R\right|}^{2} = {O}_{0}^{2} + {R}_{0}^{2} + {O}_{0} {R}_{0} exp \left[i\left({φ}_{O}-{φ}_{R}\right)\right] + {O}_{0} {R}_{0} exp \left[-i\left({φ}_{O}-{φ}_{R}\right)\right]$

In the expression (3), the first term in the right side corresponds to a light intensity component of object beam O, the second term in the right side corresponds to a light intensity component of reference beam R, the third term in the right side corresponds to a direct image component produced by modulation of object beam O with reference beam R, and the fourth term in the right side corresponds to a conjugate image component.

In the optical system shown in Figs. 2A and 2B, a direction of incidence of reference beam R is arranged as being inclined with respect to a direction of incidence of object beam O. Therefore, by discrete Fourier transform of off-axis hologram I_{OR}, such a spectrum that the third term in the right side is separate from other terms is obtained. By applying frequency filtering to the obtained spectrum, the direct image component in the third term is extracted.

By applying discrete Fourier transform and frequency filtering, a complex amplitude off-axis hologram J_{OR} (x, y) where object beam O is recorded as shown in an expression (4) is obtained. ${J}_{OR} \left(x, y\right) = {O}_{0} {R}_{0} exp \left[i\left({φ}_{O}-{φ}_{R}\right)\right]$

A distribution of reference beam R is expressed as an analytical solution of a spherical wave shown in an expression (5) based, for example, on a coordinate (x_{R}, y_{R}, z_{R}) of an already-known point light source and a wave number k (= 2π/λ, λ: wavelength) of the point light source. $R \left(x, y\right) = \frac{A}{r} exp \left[ikr\right] , r = \sqrt{{\left(x-{x}_{R}\right)}^{2} + {\left(y-{y}_{R}\right)}^{2} + {\left(z-{z}_{R}\right)}^{2}}$

An object beam hologram U (x, y) is expressed as in an expression (6), from the expressions (4) and (5). * represents a complex conjugate number. $U \left(x, y\right) = \frac{{J}_{OR} \left(x, y\right)}{R * \left(x, y\right)} = {O}_{0} exp \left({iφ}_{O}\left(x, y\right)\right)$

Object beam hologram U (x, y) in the expression (6) corresponds to the surface distribution of the amplitude and the phase of object beam O at the recording surface of image sensor 20.

In order to calculate a complex amplitude reflection coefficient r of the sample from object beam hologram U (x, y), an illumination light hologram U_{Q} (x, y) should be obtained from information on illumination light Q. By arranging a reference surface the complex amplitude reflection coefficient of which has already been known instead of sample S, illumination light hologram U_{Q} (x, y) can be calculated based on reflection light from the reference surface. The reference surface may be formed on a substrate. An object where the reference surface is formed is also referred to as a reference.

In the expressions (1) to (6) above, instead of object beam O generated as a result of reflection of illumination light Q at sample S, reference-reflection illumination light Q_{ref} generated as a result of reflection of illumination light Q at the reference surface is used to obtain a reference-reflection illumination light hologram U_{Qref} (x, y). Reference-reflection illumination light hologram U_{Qref} (x, y) includes information calculated from the reference surface. Illumination light hologram U_{Q} (x, y) is expressed as in an expression (7), with an already-known complex amplitude reflection coefficient r_{ref} of the reference surface. ${U}_{Q} \left(x, y\right) = \frac{{U}_{Qref} \left(x, y\right)}{{r}_{ref}}$

In an example where a surface distribution Q (x, y) of illumination light Q can be expressed by the analytical solution, instead of reference measurement using the reference surface, the analytical solution may be used to calculate illumination light hologram U_{Q} (x, y). Specifically, a surface distribution r (x, y) of the complex amplitude reflection coefficient of the sample is expressed as in an expression (8), with object beam hologram U (x, y) and illumination light hologram U_{Q} (x, y). $r \left(x, y\right) = \frac{U \left(x, y\right)}{{U}_{Q} \left(x, y\right)}$

When reflection only at the outermost surface of sample S is recorded, a surface topography h (x, y) of sample S is expressed as in an expression (9), with surface distribution r (x, y) of the complex amplitude reflection coefficient. $h \left(x, y\right) = arg \left(r\left(x, y\right)\right) \frac{λ}{4 π {cosθ}_{i}}$

λ represents a wavelength of the light source, θᵢ represents an angle of incidence on sample S, and arg is a function that obtains an argument (phase) of a complex number. Since arg is a multiple-valued function, phase unwrapping or the like for resolving the phase may be performed as necessary.

In an optical system having a small numerical aperture, accuracy of a coordinate of the point light source of reference beam R is not so much required. When accuracy of the coordinate is required, however, for example, the method disclosed in WO2023/079741 may be used.

### <D. Processing Procedure of Measurement Processing>

An exemplary processing procedure of processing for measuring sample S with the use of optical measurement system 1 according to the present embodiment will now be described.

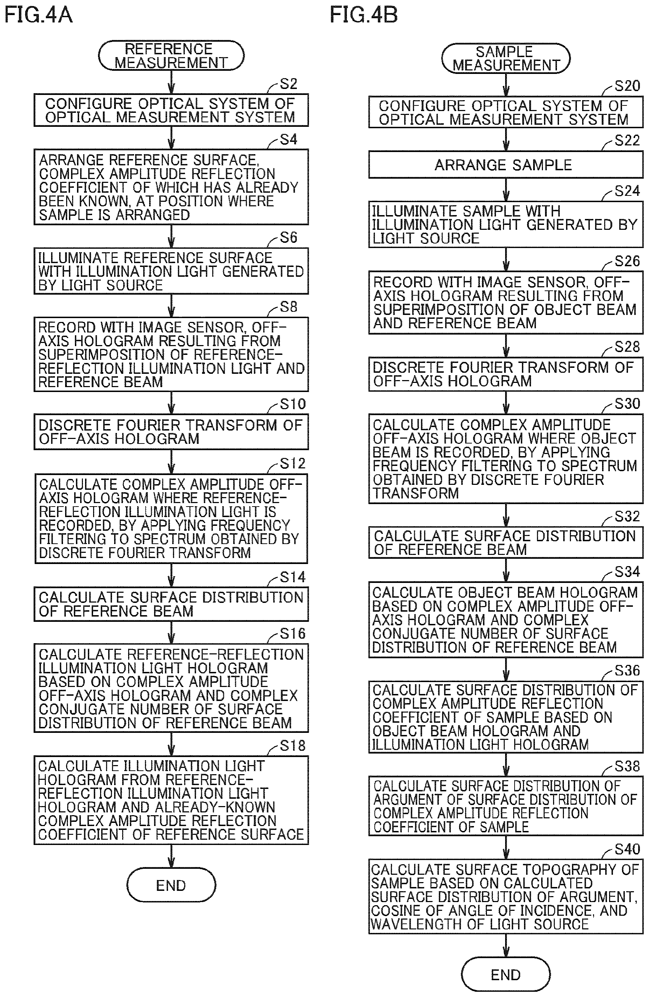

Figs. 4A and 4B each show an exemplary processing procedure of processing for measuring sample S with the use of optical measurement system 1 according to the present embodiment. Fig. 4A shows an exemplary processing procedure in reference measurement and Fig. 4B shows an exemplary processing procedure in sample measurement. The order of conducting reference measurement shown in Fig. 4A and sample measurement shown in Fig. 4B does not matter.

Referring to Fig. 4A, the optical system of optical measurement system 1 is configured (step S2). In the configured optical system, the reference surface, the complex amplitude reflection coefficient of which has already been known, is arranged at a position where sample S is arranged (step S4).

The reference surface is illuminated with illumination light Q generated by light source 22 (step S6) and an off-axis hologram I_{QrefR} (x, y) resulting from superimposition of reference-reflection illumination light Q_{ref} which is reflection light from the reference surface and reference beam R is recorded by image sensor 20 (step S8). In other words, in step S8, the wavefront of reflection light from the reference surface is recorded.

Information processing apparatus 100 performs discrete Fourier transform of off-axis hologram I_{QrefR} recorded by image sensor 20 (step S10). Information processing apparatus 100 calculates a complex amplitude off-axis hologram J_{QrefR} (x, y) where reference-reflection illumination light Q_{ref} is recorded, by applying frequency filtering to the spectrum obtained by discrete Fourier transform (step S12).

Information processing apparatus 100 obtains a surface distribution R (x, y) of reference beam R (step S14). For example, surface distribution R (x, y) of reference beam R may be the analytical solution of the spherical wave shown in the expression (5) described above. Information processing apparatus 100 calculates reference-reflection illumination light hologram U_{Qref} (x, y) based on complex amplitude off-axis hologram J_{QrefR} (x, y) and the complex conjugate number of surface distribution R (x, y) of reference beam R (step S16).

Information processing apparatus 100 calculates illumination light hologram U_{Q} (x, y) from reference-reflection illumination light hologram U_{Qref} (x, y) and already-known complex amplitude reflection coefficient r_{ref} of the reference surface (step S18). The process then ends.

As described above, in an example where surface distribution Q (x, y) of illumination light Q can be expressed by the analytical solution, reference measurement shown in Fig. 4A does not have to be conducted.

Referring to Fig. 4B, the optical system of optical measurement system 1 is configured (step S20). When the optical system of optical measurement system 1 has already been configured, processing in step S20 is skipped. In the configured optical system, sample S is arranged (step S22).

Sample S is illuminated with illumination light Q generated by light source 22 (step S24) and off-axis hologram I_{OR} (x, y) resulting from superimposition of object beam O which is reflection light from sample S and reference beam R is recorded by image sensor 20 (step S26). In other words, in step S26, the wavefront of reflection light from sample S is recorded.

Information processing apparatus 100 performs discrete Fourier transform of off-axis hologram I_{OR} (x, y) recorded by image sensor 20 (step S28). Information processing apparatus 100 calculates complex amplitude off-axis hologram J_{OR} (x, y) where object beam O is recorded, by applying frequency filtering to the spectrum obtained by discrete Fourier transform (step S30).

Information processing apparatus 100 obtains surface distribution R (x, y) of reference beam R (step S32). For example, surface distribution R (x, y) of reference beam R may be the analytical solution of the spherical wave shown in the expression (5) described above. When surface distribution R (x, y) of reference beam R has already been calculated, processing in step S32 is skipped. Information processing apparatus 100 calculates object beam hologram U (x, y) based on complex amplitude off-axis hologram J_{OR} (x, y) and the complex conjugate number of surface distribution R (x, y) of reference beam R (step S34).

Information processing apparatus 100 calculates surface distribution r (x, y) of the complex amplitude reflection coefficient of sample S based on object beam hologram U (x, y) and illumination light hologram U_{Q} (x, y) (step S36). Information processing apparatus 100 calculates the surface distribution of the argument of surface distribution r (x, y) of the complex amplitude reflection coefficient of sample S (step S38) and calculates surface topography h (x, y) of sample S based on the calculated surface distribution of the argument, a cosine of angle of incidence θᵢ, and wavelength λ of the light source (step S40). The process then ends.

### <E. Setting of Angle of Incidence>

How complex amplitude reflection coefficient r behaves in the sample having a film structure will now be described.

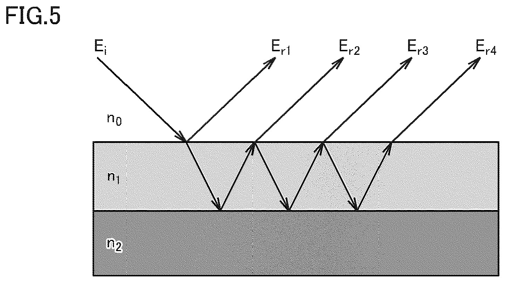

As shown in Fig. 5, as light is incident on the sample having the film structure, multiple reflection may occur. An example where light waves having a complex amplitude Eᵢ are incident on the sample having the film structure and mth-order reflection light having a complex amplitude Eᵣₘ (m being an integer not smaller than one) is produced is considered. Coefficient r of complex amplitude reflection is expressed as in an expression (10), as the sum of reflection at the outermost surface and a multiple reflection component other than that. $r = \frac{1}{{E}_{i}} {\sum }_{m = 1}^{∞} {E}_{rm} = \frac{{E}_{r 1}}{{E}_{i}} + {\sum }_{m = 2}^{∞} \frac{{E}_{rm}}{{E}_{i}}$

Coefficient r of complex amplitude reflection is expressed as in an expression (11), where Eᵣ₁/Eᵢ is set to a complex amplitude reflection coefficient r₁ of outermost-surface-reflection light and Σ(Eᵣₘ/Eᵢ) is set to complex amplitude reflection coefficient rᵣₑₘ of multiple reflection light. $r = {r}_{1} + {r}_{rem} , {r}_{1} = \frac{{E}_{r 1}}{{E}_{i}} , {r}_{rem} = {\sum }_{m = 2}^{∞} \frac{{E}_{rm}}{{E}_{i}}$

Complex amplitude reflection coefficient r₁ of outermost-surface-reflection light is based on light reflected at the surface (or the outermost surface) of sample S, and complex amplitude reflection coefficient rᵣₑₘ of multiple reflection light is based on a plurality of light beams reflected at portions other than the surface (or the outermost surface) of sample S.

For example, in a sample or the like where a transparent film is formed on a surface high in reflectance, magnitude |r₁| of the complex amplitude reflection coefficient of the transparent film may be smaller than magnitude |rᵣₑₘ| of the complex amplitude reflection coefficient of multiple reflection light. In this case, a component of rᵣₑₘ may be measured as the surface topography of the sample.

In optical measurement system 1 according to the present embodiment, angle of incidence θᵢ of illumination light Q is set based on the complex amplitude reflection coefficient of the transparent film and the complex amplitude reflection coefficient of multiple reflection light. Angle of incidence θᵢ of illumination light Q may be set, for example, such that magnitude |r₁| of the complex amplitude reflection coefficient of the transparent film is larger than magnitude |rᵣₑₘ| of the complex amplitude reflection coefficient of multiple reflection light. In other words, angle of incidence θᵢ of illumination light Q may be set such that magnitude of complex amplitude reflection coefficient r₁ of outermost-surface-reflection light is larger than magnitude of complex amplitude reflection coefficient rᵣₑₘ of multiple reflection light.

Since accuracy in measurement is determined based on relation between reflection at the outermost surface and multiple reflection components other than that, relation between magnitude of complex amplitude reflection coefficient r₁ of outermost-surface-reflection light and magnitude of complex amplitude reflection coefficient rᵣₑₘ of multiple reflection light can be set as appropriate in accordance with required accuracy in measurement. For example, relation of |r₁| > α×|rᵣₑₘ| (for example, 0.8 < α < 1) may be satisfied.

A value of complex amplitude reflection coefficient r₁ of outermost-surface-reflection light necessary for setting of angle of incidence θᵢ can be calculated by using the Fresnel equation.

Specifically, when light is incident from a medium having an index of refraction n₀ on a medium having an index of refraction n₁ at angle of incidence θᵢ, an S polarization reflection coefficient r₀₁ₛ and a P polarization reflection coefficient r₀₁ₚ are expressed as in expressions (12) and (13), respectively, in accordance with the Fresnel equation. ${r}_{01 s} = \frac{{n}_{0} {cosθ}_{i} - {n}_{1} {cosθ}_{t}}{{n}_{0} {cosθ}_{i} + {n}_{1} {cosθ}_{t}}$ ${r}_{01 p} = \frac{{n}_{1} {cosθ}_{i} - {n}_{0} {cosθ}_{t}}{{n}_{1} {cosθ}_{i} + {n}_{0} {cosθ}_{t}}$

θₜ represents an angle of refraction upon incidence from the medium having index of refraction n₀ on the medium having index of refraction n₁ and it is calculated in accordance with the Snell's law shown in an expression (14). ${θ}_{t} = {sin}^{- 1} \left(\frac{{n}_{0}}{{n}_{1}}{sinθ}_{i}\right)$

From the expressions (12) to (14), complex amplitude reflection coefficient r₁ of outermost-surface-reflection light can be calculated from S polarization reflection coefficient r₀₁ₛ and P polarization reflection coefficient r₀₁ₚ.

Since magnitude of complex amplitude reflection coefficient r of the sample calculated in accordance with the Fresnel equation becomes closer to one as angle of incidence θᵢ is larger, magnitude |r₁| of the complex amplitude reflection coefficient of outermost-surface-reflection light also becomes closer to one. Since remaining components of complex amplitude reflection coefficient r of the sample correspond to complex amplitude reflection coefficient rᵣₑₘ of multiple reflection light, contribution by complex amplitude reflection coefficient r₁ of outermost-surface-reflection light can be made larger than rᵣₑₘ by increasing angle of incidence θᵢ.

The value of complex amplitude reflection coefficient rᵣₑₘ is generally calculated by using an expression of multiple reflection. In an example where the film structure of the sample is unknown and it is unable to calculate the value of complex amplitude reflection coefficient rᵣₑₘ, the value can be estimated as |rᵣₑₘ|² = 1-|r₁|², which is a maximum value when there is no transmitting component and no absorption by the film. In other words, angle of incidence θᵢ may be set such that |r₁|² exceeds 50%.

Even when angle of incidence θᵢ is set such that |r₁| is larger than |rᵣₑₘ|, the component of rᵣₑₘ does not become 0. A maximum error given by the component of complex amplitude reflection coefficient rᵣₑₘ of multiple reflection light to the argument (see the expression (9)) of r₁ can be estimated by assuming an example where the argument of the sum of r₁ and rᵣₑₘ deviates to the maximum extent. In other words, influence on the measurement result by surface topography h (x, y) of sample S can be assessed based on maximum deviation of the argument.

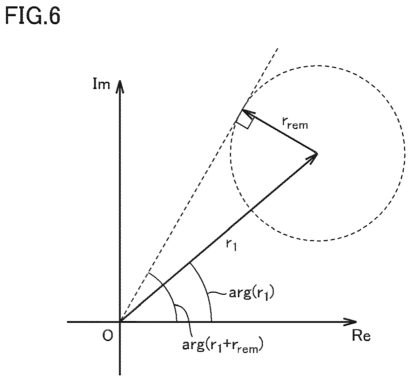

Referring to Fig. 6, in a complex plane, the sum of r₁ and rᵣₑₘ corresponds to a resultant vector of a vector indicating r₁ and a vector indicating rᵣₑₘ. In other words, a tip end of the vector indicating the sum of r₁ and rᵣₑₘ is located on a circumference having a radius |rᵣₑₘ| around a tip end of the vector indicating r₁.

The argument of the sum of r₁ and rᵣₑₘ deviates to the maximum extent when a straight line along which the vector indicating the sum of r₁ and rᵣₑₘ passes through the origin comes in contact with the circumference as shown in Fig. 6. Therefore, maximum influence hₑᵣᵣ given by the component of rᵣₑₘ on surface topography h (x, y) of the sample is expressed as in an expression (15). ${h}_{err} = {sin}^{- 1} \left(\frac{\left|{r}_{rem}\right|}{\left|{r}_{1}\right|}\right) \frac{λ}{4 π {cosθ}_{i}}$

According to the expression (15), as angle of incidence θᵢ is made larger, influence on the measurement result by rᵣₑₘ can be less, whereas an error caused in the measurement result by a coefficient 1/cosθᵢ also becomes large. With a sample in-plane resolution when illumination light Q is perpendicularly incident being denoted as δ, the sample in-plane resolution in a direction of inclination of illumination light Q becomes worse to δ/cosθᵢ. Therefore, an upper limit of angle of incidence θᵢ may be determined based on the necessary resolution and an allowed error.

### <F. Exemplary Measurement>

Exemplary measurement of sample S by optical measurement system 1 according to the present embodiment will now be shown. In the exemplary measurement below, sample S is a mirror surface to which transmissive ink is attached.

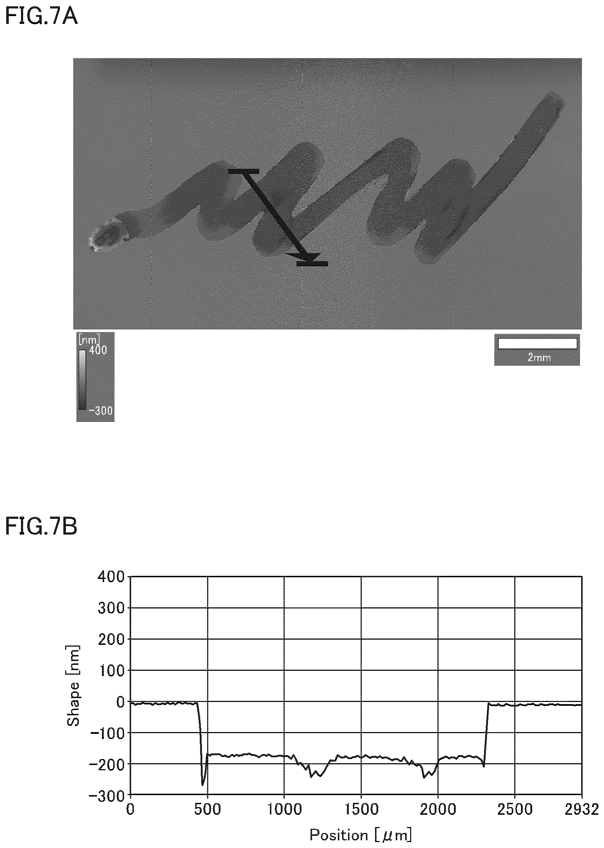

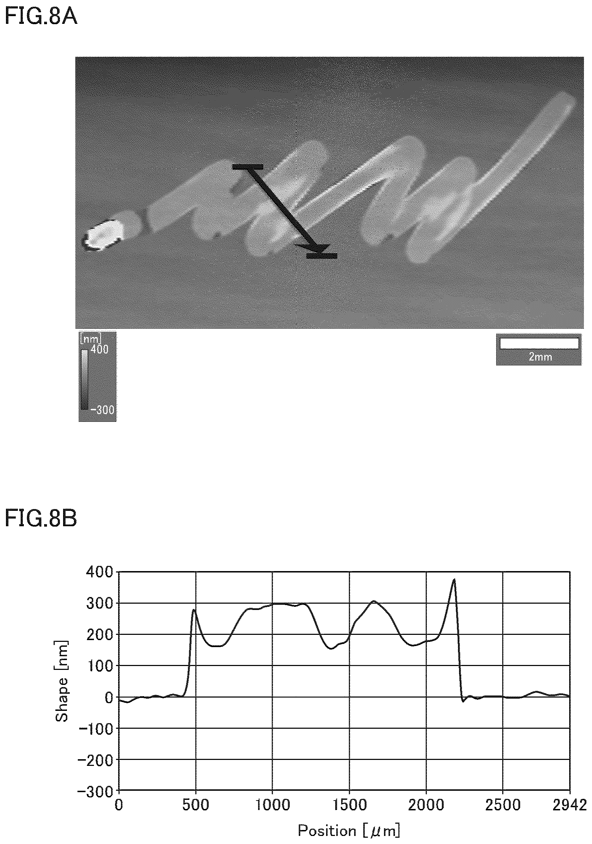

Figs. 7A and 7B show exemplary measurement when a relatively small angle of incidence is set. Figs. 8A and 8B show exemplary measurement when a relatively large angle of incidence is set.

Specifically, Figs 7A and 7B show as a comparative example, exemplary measurement when angle of incidence θᵢ is set to 5.1 degrees in optical measurement system 1 shown in Figs. 2A and 2B. Figs. 8A and 8B show exemplary measurement when angle of incidence θᵢ is set to 80.2 degrees in optical measurement system 1 shown in Figs. 2A and 2B. Angle of incidence θᵢ at 80.2 degrees satisfies such a condition that magnitude |r₁| of the complex amplitude reflection coefficient of outermost-surface-reflection light is larger than magnitude |rᵣₑₘ| of the complex amplitude reflection coefficient of multiple reflection light.

Fig. 7A shows an image resulting from visualization of the calculated surface distribution of surface topography h (x, y) of sample S. Fig. 7B shows a cross-sectional shape (or profile) of a portion shown with an arrow in the image shown in Fig. 7A. In the exemplary measurement shown in Figs. 7A and 7B, a shape of the ink attached to the mirror surface should exhibit a projecting shape, however, it is erroneously measured as a recessed shape due to influence by interference between the surface of the ink and the mirror surface.

Fig. 8A shows an image resulting from visualization of the calculated surface distribution of surface topography h (x, y) of sample S. Fig. 8B shows a cross-sectional shape of a portion shown with an arrow in the image shown in Fig. 8A. In the exemplary measurement shown in Figs. 8A and 8B, it can be seen that a reflective component at the surface of the ink is correctly extracted and the true projecting shape is measured.

Thus, optical measurement system 1 according to the present embodiment can correctly measure the topography of the outermost surface of a transmissive object present on the surface high in reflectance.

### <G. Diffraction Calculation of Wavefront and Focusing on Inclined Surface>

Object beam hologram U (x, y) described above is calculated based on off-axis hologram I_{OR} (x, y) recorded by image sensor 20. Therefore, object beam hologram U (x, y) shows the distribution at the recording surface of image sensor 20. The distribution at the sample surface may be calculated from object beam hologram U (x, y). For calculation of the distribution at the sample surface, for example, a diffraction calculation technique can be used.

When an angular spectrum method (plane wave expansion) is used by way of example, an object beam hologram U_{d} and an illumination light hologram U_{Qd} at a surface distant by any distance d can be calculated in accordance with expressions (16) and (17). ${U}_{d} \left(x, y\right) = {F}^{- 1} \left[F\left[U\left(x, y\right)\right]exp\left({ik}_{z}d\right)\right]$ $\begin{matrix}{U}_{Qd} \left(x, y\right) = {F}^{- 1} \left[F\left[{U}_{Q}\left(x, y\right)\right]exp\left({ik}_{z}d\right)\right] \\ {k}_{z} = \sqrt{{\left(\frac{2 π}{λ}\right)}^{2} - {{k}_{x}}^{2} - {{k}_{y}}^{2}}\end{matrix}$

Processing in steps S36 to S40 shown in Fig. 4B is performed by using object beam hologram U_{d} and illumination light hologram U_{Qd}, instead of object beam hologram U and illumination light hologram U_{Q}.

Accuracy in measurement of surface topography h (x, y) can further be improved by calculating the distribution at the sample surface.

Furthermore, since angle of incidence θᵢ of illumination light Q is relatively large, the sample surface is inclined largely with respect to a direction of expansion of the wavefront (a z-axis direction). Each hologram may be subjected to wavefront rotation processing such that object beam hologram U_{d} and illumination light hologram U_{Qd} are focused on the inclined sample surface.

Specifically, a spectrum F [U_{d}] (u, v) is calculated by Fourier transform of object beam hologram U_{d} (x, y). Spectrum F [U_{d}] (u, v) represents a group of plane waves that propagate in various directions included in hologram U_{d} (x, y).

A wave number vector k = (kₓ, k_{y}, k_{z}) of each plane wave is determined in accordance with an expression (18), based on a coordinate u, v of spectrum F [U_{d}] and wavelength λ of the light source. $\left.\begin{matrix}{k}_{x} = 2 πu \\ {k}_{y} = 2 πv \\ {k}_{z} = \sqrt{{\left(\frac{2 π}{λ}\right)}^{2} - {k}_{x}^{2} - {k}_{y}^{2}}\end{matrix}\right\}$

Wave number vector k of each plane wave included in hologram U_{d} (x, y) is thus calculated from spectrum F [U_{d}] (u, v).

In succession, processing for rotationally moving each plane wave included in spectrum F [U_{d}] (u, v) in accordance with the angle of the inclined sample surface is performed. More specifically, wave number vector k of the plane wave is transformed with a three-dimensional rotational matrix T_{R} corresponding to the angle of the sample surface. With a wave number vector k' = (kₓ', k_{y}', k_{z}') resulting from rotation of each plane wave, calculation in accordance with an expression (19) is performed. $\left[\begin{matrix}{k}_{x}^{′} \\ {k}_{y}^{′} \\ {k}_{z}^{′}\end{matrix}\right] = {T}_{R} \left[\begin{matrix}{k}_{x} \\ {k}_{y} \\ {k}_{z}\end{matrix}\right]$

Processing for calculating wave number vector k' resulting from rotation of each plane wave is thus performed by multiplying wave number vector k of each plane wave by three-dimensional rotational matrix T_{R} corresponding to the angle of the sample surface. Three-dimensional rotational matrix T_{R} can be determined, for example, in accordance with the Rodrigues' rotation formula.

As a result of rotation of wave number vector k, the coordinate (u, v) of spectrum F [U_{d}] corresponding to each component of the plane wave moves to a coordinate (kₓ'/2π, k_{y}'/2π). By performing such coordinate transformation on all plane waves (all coordinates included in spectrum F [U_{d}] (u, v)), a new spectrum F [U_{T}] (u, v) showing a distribution at the inclined sample surface is calculated.

Finally, an object beam hologram U_{dT} at the inclined sample surface is calculated by inverse Fourier transform of calculated new spectrum F [U_{T}].

By similar calculation also for illumination light hologram U_{Qd} (x, y), an illumination light hologram U_{QdT} at the inclined sample surface is calculated.

Processing in steps S36 to S40 shown in Fig. 4B is performed by using object beam hologram U_{dT} (x, y) and illumination light hologram U_{QdT}, instead of object beam hologram U and illumination light hologram U_{Q}.

By thus subjecting the hologram to the wavefront rotation processing, accuracy in measurement of surface topography h (x, y) at the inclined sample surface can further be improved.

### <H. Method of Arranging Sample>

In the optical system of the optical measurement system according to the present embodiment, relatively large angle of incidence θᵢ is selected, and hence the in-plane resolution is different between a direction of inclination of illumination light and a direction orthogonal thereto.

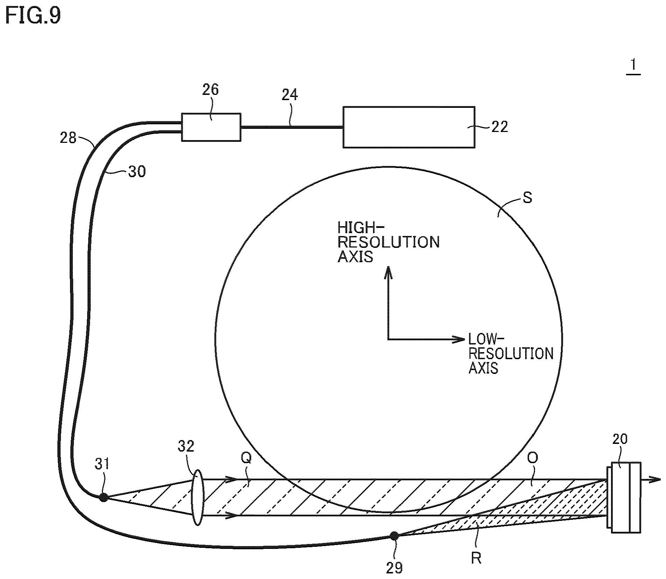

A high-resolution axis and a low-resolution axis in optical measurement system 1 according to the present embodiment will be described with reference to Fig. 9. When the optical system of optical measurement system 1 is viewed from above, the sample in-plane resolution in a direction of incidence of illumination light Q is lower than the sample in-plane resolution in the direction orthogonal thereto (which can also be referred to, for example, as a width of irradiation with illumination light Q).

In Fig. 9, an axis along which the sample in-plane resolution is relatively low is referred to as the low-resolution axis and an axis along which the sample in-plane resolution is relatively high is referred to as the high-resolution axis. With the sample in-plane resolution when illumination light Q is perpendicularly incident being denoted as δ, a sample in-plane resolution δ_{θi} in the direction of inclination of illumination light Q is expressed as δ_{θi} = δ/cosθᵢ.

When measurement of the cross-sectional shape of the sample in consideration of such a difference in sample in-plane resolution is desired, the sample may be arranged such that a direction of a cross-section to be measured matches with the high-resolution axis. In other words, the sample may be arranged such that the direction of the cross-sectional shape to be measured (a direction of scanning of the cross-section) is orthogonal to a direction of illumination light Q illuminating sample S (or a direction of inclination).

For example, when measurement of the cross-sectional shape of an edge portion of the sample is desired, the direction of the cross-sectional shape can match with the high-resolution axis by inclining illumination light in a tangential direction of the edge of the sample from a state of perpendicular incidence.

### <I. Modification of Incident Light>

In the exemplary basic configuration of the optical measurement system according to the present embodiment shown in Fig. 1, illumination light 2 is parallel light having a predetermined diameter. Illumination light 2 does not have to be parallel light. For example, diverging light can also be employed as illumination light 2.

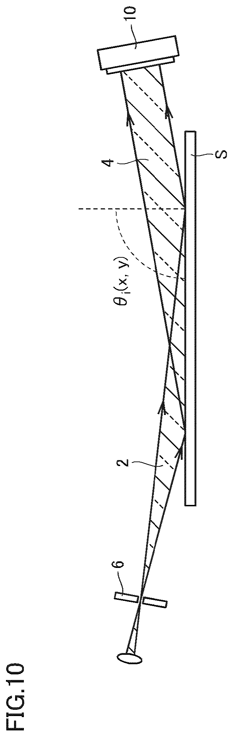

Another exemplary basic configuration of the optical measurement system according to the present embodiment will be described with reference to Fig. 10. In the optical measurement system shown in Fig. 10, illumination light 2 is incident on sample S after it passes through a pinhole 6. Therefore, illumination light 2 illuminating sample S is diverging light. In other words, diverging light that has passed through pinhole 6 is incident on sample S.

Pinhole 6 does not have to be provided and light emitted from the fiber end of the optical fiber may be used as it is as illumination light 2.

By adopting an optical system including pinhole 6, an optical system using light emitted from the fiber end as it is as illumination light 2, or the like, a noise component superimposed on illumination light 2 can be reduced.

In the optical system shown in Fig. 10, angle of incidence θᵢ is different depending on a position of the sample surface. Therefore, angle of incidence θᵢ is not constant but calculation by using an angle of incidence θᵢ (x, y) for each coordinate of sample S is required.

When θᵢ can sufficiently be regarded as being constant in light of required accuracy in measurement, approximate calculation may be performed, with angle of incidence θᵢ being regarded as being constant.

### <J. Method Using Information on Bright Fringes and Dark Fringes of Interference Fringes>

As described above, maximum influence hₑᵣᵣ by the component of complex amplitude reflection coefficient rᵣₑₘ on surface topography h (x, y) of the sample is calculated in accordance with the expression (15). With increase in angle of incidence θᵢ, the coefficient (1/cosθᵢ) including angle of incidence θᵢ becomes large and hence sensitivity in measurement of surface topography h (x, y) lowers. In other words, reduction of an error only based on setting of angle of incidence θᵢ is limited.

Accuracy in measurement can further be improved by referring not only to phase information of complex amplitude reflection coefficient r of the sample but also amplitude information.

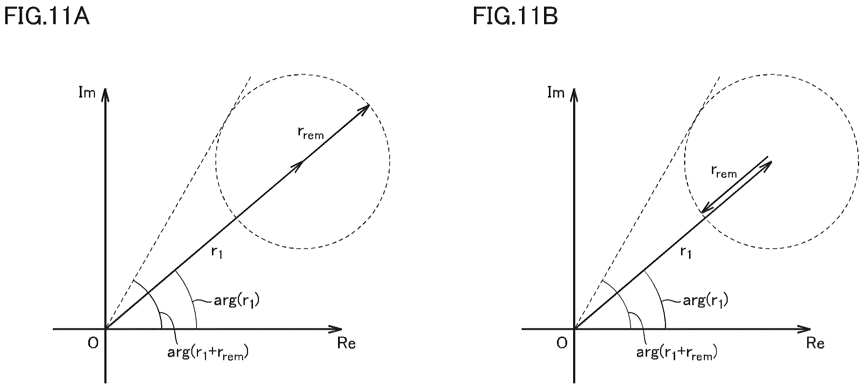

Figs. 11A and 11B show exemplary relation between a phase of complex amplitude reflection coefficient r₁ of outermost-surface-reflection light and a phase of complex amplitude reflection coefficient rᵣₑₘ of multiple reflection light. Fig. 11A shows an example where r₁ and rᵣₑₘ are the same in phase and Fig. 11B shows an example where r₁ and rᵣₑₘ are opposite in phase.

No error originating from the phase difference is caused in the example where r₁ and rᵣₑₘ are the same in phase as shown in Fig. 11A and in the example where r₁ and rᵣₑₘ are opposite in phase as shown in Fig. 11B. In the example where r₁ and rᵣₑₘ are the same in phase, an amplitude of complex amplitude reflection coefficient r of the sample which is the sum of r₁ and rᵣₑₘ is maximum, and in the example where r₁ and rᵣₑₘ are opposite in phase, the amplitude of complex amplitude reflection coefficient r of the sample is minimum.

In other words, in an example where a ratio between an amplitude component of r₁ and an amplitude component of rᵣₑₘ can be regarded as being substantially constant, the error originating from the phase difference can be regarded as being absent for complex amplitude reflection coefficient r of the sample which is the sum of r₁ and rᵣₑₘ, at a position where the amplitude is maximum or minimum, which means that the error originating from the phase difference can be regarded as being absent at positions of the bright fringes and the dark fringes of the interference fringes that appear in the hologram.

As set forth above, by extracting the information on the bright fringes and the dark fringes of the interference fringes that appear in the hologram recorded by image sensor 20 and calculating the surface topography of the sample, the error shown in the expression (15) described above is eliminated and accuracy in measurement can further be improved. For example, the information on the bright fringes and the dark fringes of the interference fringes that appear in off-axis hologram I_{OR} may be extracted to generate the off-axis hologram from which noise has been removed, and surface topography h (x, y) of sample S may be calculated based on the off-axis hologram from which noise has been removed.

### <K. Method of Correction Based on Magnitude of Complex Amplitude Reflection Coefficient>

A method of correcting phase shift originating from complex amplitude reflection coefficient rᵣₑₘ, by using intermediate data which is neither of the same phase and the opposite phase, will now be described.

More specifically, the surface topography of the sample may be calculated by using an amount of correction based on magnitude |r| of the complex amplitude reflection coefficient of the sample, magnitude |r₁| of the complex amplitude reflection coefficient, and magnitude |rᵣₑₘ| of the complex amplitude reflection coefficient. It is assumed that magnitude |r| of the complex amplitude reflection coefficient of the sample, magnitude |r₁| of the complex amplitude reflection coefficient, and magnitude |rᵣₑₘ| of the complex amplitude reflection coefficient have been obtained at necessary accuracy.

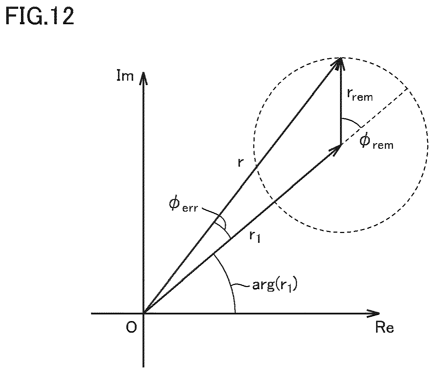

An amount of phase shift originating from complex amplitude reflection coefficient rᵣₑₘ of multiple reflection light will be described with reference to Fig. 12. An amount of phase shift ϕₑᵣᵣ from complex amplitude reflection coefficient r₁ due to complex amplitude reflection coefficient rᵣₑₘ is expressed in an expression (20) below, with the phase of rᵣₑₘ being expressed as ϕᵣₑₘ. Phase ϕᵣₑₘ of rᵣₑₘ is calculated by using |r|, |r₁|, and |rᵣₑₘ| in accordance with an expression (21). ${φ}_{err} = {tan}^{- 1} \left(\frac{\left|{r}_{rem}\right| {sinφ}_{rem}}{\left|{r}_{1}\right| + \left|{r}_{rem}\right| {cosφ}_{rem}}\right)$ ${φ}_{rem} = π - {cos}^{- 1} \left(\frac{{\left|{r}_{1}\right|}^{2} + {\left|{r}_{rem}\right|}^{2} - {\left|r\right|}^{2}}{2 \left|{r}_{1}\right| \left|{r}_{rem}\right|}\right)$

Since the sign of phase ϕᵣₑₘ cannot be determined only in accordance with the expression (21), the sign of phase ϕᵣₑₘ is determined, for example, based on advance information about characteristics of the sample or information on change in value when polarization, the angle of incidence, or the wavelength are changed.

Finally, corrected surface topography h (x, y) can be calculated in accordance with an expression (22) below, by using amount of phase shift ϕₑᵣᵣ from complex amplitude reflection coefficient r₁ of outermost-surface-reflection light. $h \left(x, y\right) = \left(arg\left(r\left(x, y\right)\right)+{φ}_{err}\right) \frac{λ}{4 π {cosθ}_{i}}$

In the method of using the information on the bright fringes and the dark fringes of the interference fringes described above, the number of sampling points effective at the sample surface may decrease and the sample in-plane resolution may lower. Depending on the sample, clear bright fringes and dark fringes may not be formed.

In contrast, by using the method of correcting with intermediate data, phase shift originating from complex amplitude reflection coefficient rᵣₑₘ, a multiple reflection component can be removed and accuracy in measurement can further be improved.

### <L. Sample Having Rough Surface>

The surface topography of sample S having a rough surface can be measured in optical measurement system 1 according to the present embodiment.

As shown in the expression (9) described above, surface topography h (x, y) of sample S is calculated by obtaining the argument of the complex amplitude reflection coefficient. When a range of variation in argument exceeds 2π, however, the value of the arg function in the expression (9) cannot be resolved and hence surface topography h (x, y) of sample S cannot be resolved.

A phase ϕ of complex amplitude reflection coefficient r of sample S with respect to surface topography h (x, y) is expressed in an expression (23) below. $φ \left(x, y\right) = \frac{4 π}{λ} h \left(x, y\right) {cosθ}_{i}$

Since surface topography h (x, y) is multiplied by the term cosθᵢ, an amount of change in phase ϕ can be smaller as angle of incidence θᵢ is larger. In other words, the surface topography of sample S having the rough surface can be measured by setting angle of incidence θᵢ such that a difference in phase ϕ does not exceed 2π within a range (a range from a minimum value hₘᵢₙ to a maximum value hₘₐₓ) of a height h included in surface topography h (x, y). In other words, even a sample with height variation can accurately be measured. This condition is expressed in an expression (24) below. By transforming the expression (24), an expression (25) is obtained as the condition for angle of incidence θᵢ. $\frac{4 π}{λ} \left({h}_{max}-{h}_{min}\right) {cosθ}_{i} < 2 π$ ${θ}_{i} > {cos}^{- 1} \left\{\frac{λ}{2 \left({h}_{max}-{h}_{min}\right)}\right\}$

In other words, angle of incidence θᵢ may be set to exceed the inverse cosine (arccosine) of a value (that is, a quotient) calculated by dividing a half wavelength (λ/2) of the light source by an amount of variation (hₘₐₓ-hₘᵢₙ) of the surface topography (or a height from a measurement reference plane) of sample S. When the value calculated by dividing the half wavelength (λ/2) of light generated by light source 22 by the amount of variation of the surface topography of sample S exceeds one, the difference in phase ϕ does not exceed 2π at any angle of incidence θᵢ and hence any angle of incidence θᵢ can be set.

By setting angle of incidence θᵢ as described above, an undulation of the surface of sample S can be measured. The surface topography of any sample can be measured, without being limited to the sample where the transparent film is formed on the surface high in reflectance.

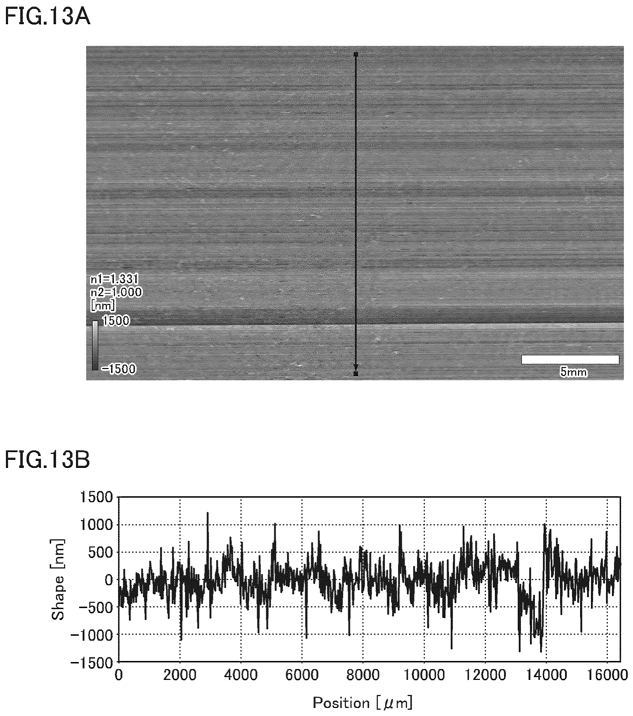

Figs. 13A and 13B show exemplary measurement where a surface of metal as sample S where the amount of variation of the surface topography is approximately 2 µm is measured with optical measurement system 1 shown in Figs. 2A and 2B. In Figs. 13A and 13B, laser having a wavelength of 638 nm is employed as light source 22. In this case, according to the expression (25) described above, angle of incidence θᵢ is calculated as having to exceed approximately 80.822 degrees. Figs. 13A and 13B show exemplary measurement in an example where angle of incidence θᵢ is set to 81 degrees.

Fig. 13A shows an image obtained by visualization of the calculated surface distribution of surface topography h (x, y) of sample S. Fig. 13B shows the cross-sectional shape (or profile) of a portion shown with an arrow in the image shown in Fig. 13A.

In the exemplary measurement shown in Figs. 13A and 13B, it can be seen that a striped shape of approximately 2 µm could be measured. By thus appropriately setting angle of incidence θᵢ of illumination light Q, the topography of the rough surface difficult to be measured when illumination light Q is perpendicularly incident can also correctly be measured.

### <M. Modification>

The optical systems described above are by way of example, and depending on required specifications or restriction imposed by a space or the like, any optically equivalent modification can be made. A plurality of types of processing and functions described above can freely be combined.

In the optical measurement system described above, the optical system based on off-axis holography principles is exemplified as one implementation. The optical measurement system, however, may be implemented by using any optical system so long as the surface distribution of the amplitude and the phase of light can be obtained.

Processing details in each step included in the flowcharts described above are illustrative. Processing in a plurality of steps may be brought together as processing in a single step, or processing in a single step may be divided into processing in a plurality of steps. The processing procedures shown in the flowcharts described above are by way of example and the order of performing processing may be modified as appropriate.

Though information processing apparatus 100 performs computing processing involved with measurement of sample S in the exemplary configuration described above, for example, a computing resource on a cloud may be used to perform a part or the entirety of computing processing involved with measurement.

### <N. Summary>

The optical measurement system according to the present embodiment can contactlessly measure the topography of the outermost surface of the sample, for example, in an example where a transparent film is formed on a surface high in reflectance. For example, the optical measurement system according to the present embodiment reduces influence by multiple reflection inside the sample by setting angle of incidence θᵢ of illumination light to a relatively large angle and adopting a measurement algorithm based on information on the wavefront. The topography, for example, of the film structure of the sample can thus be measured at a nanometer-order resolution.

The optical measurement system according to the present embodiment does not damage the sample because it can contactlessly measure the surface topography of the sample. Since the optical measurement system according to the present embodiment conducts surface measurement, measurement can be faster than in linear measurement.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. An optical measurement system (1) comprising:
a light source (22);
an optical system configured to illuminate a sample (S) with light (Q) from the light source and to record a wavefront of reflection light (R) from the sample; and
a processing unit (100) configured to calculate a surface topography of the sample based on information on the wavefront of the reflection light, wherein
an angle of incidence (θᵢ) of the light illuminating the sample is set based on a complex amplitude reflection coefficient (r₁) based on light reflected at a surface of the sample and a complex amplitude reflection coefficient (rᵣₑₘ) based on light reflected at a portion other than the surface of the sample.

2. The optical measurement system according to claim 1, wherein
the optical system comprises
an image sensor (20) on which the reflection light is incident, and
an optical fiber (24, 28, 30) for superimposition of the reflection light and light from the light source at a light reception surface of the image sensor.

3. The optical measurement system according to claim 1 or 2, wherein
the sample is arranged such that a direction of a cross-sectional shape to be measured is orthogonal to a direction of the light illuminating the sample.

4. The optical measurement system according to any one of claims 1 to 3, further comprising a lens configured to convert light from the light source to parallel light, wherein
the converted parallel light is incident on the sample.

5. The optical measurement system according to any one of claims 1 to 3, further comprising a pinhole (6) through which light from the light source passes, wherein
diverging light that has passed through the pinhole is incident on the sample.

6. The optical measurement system according to claim 2, wherein
the processing unit is configured to extract information on bright fringes and dark fringes of interference fringes that appear in a hologram that is recorded by the image sensor and produced by the superimposition to calculate the surface topography of the sample.

7. The optical measurement system according to any one of claims 1 to 6, wherein
the processing unit is configured to calculate the surface topography of the sample by using an amount of correction based on magnitude of a complex amplitude reflection coefficient of the sample, magnitude of the complex amplitude reflection coefficient based on light reflected at the surface of the sample, and magnitude of the complex amplitude reflection coefficient based on light reflected at the portion other than the surface of the sample.

8. An optical measurement system (1) comprising:
a light source (22);
an optical system configured to illuminate a sample (S) with light (Q) from the light source and to record a wavefront of reflection light (R) from the sample; and
a processing unit (100) configured to calculate a surface topography of the sample based on information on the wavefront of the reflection light, wherein
an angle of incidence (θᵢ) of the light illuminating the sample is set to exceed an arccosine of a value calculated by dividing a half wavelength of light (λ/2) from the light source by an amount of variation of the surface topography of the sample.

9. An optical measurement method comprising:
illuminating (S24) a sample with light from a light source (22);
recording (S26) a wavefront of reflection light from the sample; and
calculating (S40) a surface topography of the sample based on information on the wavefront of the reflection light, wherein
an angle of incidence (θᵢ) of the light illuminating the sample is set based on a complex amplitude reflection coefficient based on light reflected at a surface of the sample and a complex amplitude reflection coefficient (rᵣₑₘ) based on light reflected at a portion other than the surface of the sample.

10. The optical measurement method according to claim 9, wherein
the recording the wavefront of the reflection light comprises recording a hologram that is produced by superimposing the reflection light and light from the light source, and
the method further comprises extracting information on bright fringes and dark fringes of interference fringes that appear in the hologram.

11. The optical measurement method according to claim 9 or 10, wherein
the calculating the surface topography of the sample is based on (i) an amount of correction based on magnitude of a complex amplitude reflection coefficient of the sample, (ii) magnitude of the complex amplitude reflection coefficient based on light reflected at the surface of the sample, and (iii) magnitude of the complex amplitude reflection coefficient based on light reflected at the portion other than the surface of the sample.

12. The optical measurement method according to any of claims 9 to 11, wherein
the sample is arranged such that a direction of a cross-sectional shape to be measured is orthogonal to a direction of the light illuminating the sample.

13. The optical measurement method according to any of claims 9 to 12, wherein the illuminating the sample comprises
converting light from the light source to parallel light, and
directing the converted parallel light onto the sample.

14. The optical measurement method according to any of claims 9 to 12, wherein the illuminating the sample comprises
producing diverging light by causing light from the light source to pass through a pinhole, and
directing the diverging light onto the sample.
